# FASCICULE DE BREVET EUROPEEN

(11) **EP 3 319 759 B1**
(45) Date de publication et mention de la délivrance du brevet: **01.05.2019**
(21) Numéro de dépôt: 16738105.2
(22) Date de dépôt: 06.07.2016
(51) Int. Cl.: B25B 15/00, F16B 23/00

(54) **OUTIL DE VISSAGE ET VIS CORRESPONDANTE**
SCHRAUBWERKZEUG UND ENTSPRECHENDE SCHRAUBE
SCREWING TOOL AND CORRESPONDING SCREW

(30) Priorité: 07.07.2015 EP 15175761
(43) Date de publication de la demande: 16.05.2018
(73) Titulaire: IPP Industries Sarl, 1967 Bramois (CH)
(72) Inventeur: TISSIERES, Christian, 1967 Bramois (CH)
(74) Mandataire: e-Patent SA
(86) Numéro de dépôt international: PCT/EP2016/066053
(87) Numéro de publication internationale: WO 2017/005825

(56) Documents cités:
- WO-A1-2008/032137
- WO-A1-2011/109040
- WO-A1-2014/195410

## Description

### Domaine technique

La présente invention concerne un outil de vissage d'axe longitudinal X selon le préambule de la revendication 1 comportant, suivant sa direction longitudinale, une première partie, d'entraînement, destinée à recevoir un couple appliqué par un utilisateur ou par un porte-outil, et une deuxième partie, de transmission, solidaire en rotation de la première partie et destinée à coopérer avec une vis pour lui retransmettre le couple reçu. Selon l'invention, la deuxième partie a une enveloppe périphérique de forme générale conique, dont la base est située du côté de la première partie, et présente trois concavités longitudinales à génératrices coniques, régulièrement réparties, définissant trois lobes de transmission radiaux identiques, dont chacun présente, dans une coupe perpendiculaire à la direction longitudinale, une portion tangentielle distale s'étendant sensiblement suivant un arc de cercle et prolongée, de part et d'autre, par deux portions de liaison dont chacune est définie par une courbe comprenant une partie principale sensiblement radiale et présentant un point d'inflexion avant de rejoindre une région de jonction proximale assurant la jonction avec une portion de liaison voisine.

La présente invention concerne également une vis présentant une tête apte à coopérer avec l'outil de vissage répondant aux caractéristiques ci-dessus pour assurer la mise en place de la vis avec cet outil de vissage.

### Etat de la technique

Des outils de vissage de ce type sont déjà connus dans la littérature brevets.

A titre d'exemple, le brevet US 2,445,525, datant de 1945, décrit un outil de vissage longitudinal comportant une partie de transmission ayant une enveloppe périphérique de forme générale conique et présentant trois évidements longitudinaux, dont le fond de chacun est délimité par un plan incliné en référence à l'axe de l'outil, ces évidements étant régulièrement répartis à la périphérie de l'enveloppe. Les évidements définissent ainsi trois lobes de transmission radiaux identiques, dont chacun présente, dans une coupe perpendiculaire à la direction longitudinale, une portion tangentielle distale s'étendant sensiblement suivant un arc de cercle et prolongée, de part et d'autre, par deux portions de liaison radiales rejoignant le fond de l'évidement correspondant. Il est notamment expliqué dans ce document qu'il est préférable de réaliser des surfaces planes plutôt que des surfaces courbes pour des questions de simplicité de fabrication. Toutefois, la réalisation de surfaces planes entraîne la présence d'arêtes vives qui peuvent être cassantes, en particulier lorsque des couples importants doivent être transmis à une vis. En outre, ces arêtes vives nuisent au guidage de l'outil lorsqu'il est engagé dans une empreinte de vis. Enfin, les inclinaisons des différentes surfaces de l'outil destinées à entrer en contact avec des surfaces de la vis sont trop importantes, en référence à l'axe longitudinal de la vis, pour qu'un effet de "stick fit" (adhérence entre l'outil et la vis par frottements) puisse être obtenu.

Le brevet US 2,066,484 de 1935 décrit un outil similaire à celui qui vient d'être décrit à la différence qu'il ne présente pas d'arête vive, toutes les surfaces étant coniques, avec un seul et même angle d'inclinaison par rapport à l'axe longitudinal. La coopération entre cet outil et la vis correspondante ne donne pas non plus lieu à un effet de "stick fit".

On constate que depuis cette invention, les outils de ce type et les vis correspondantes n'ont pas su s'imposer sur le marché de la visserie, les standards actuels étant en place depuis de nombreuses années (Phillips et Torx - marques déposées - principalement), ceux-ci mettant en oeuvre des géométries totalement différentes de celle du type qui vient d'être présenté.

Plus récemment, en 2006, a été déposée la demande internationale publiée sous le numéro WO 2008/032137 A1 qui décrit un outil et une vis de géométries similaires à celles exposées dans les deux documents américains cités plus haut. Cette demande propose en outre de répondre au besoin existant en matière d'effet "stick fit", en formant des séries de points en surélévation sur les lignes médianes des régions de jonction concaves situées entre les lobes de transmission de l'outil. Aucun outil n'est apparu sur le marché pour l'instant qui serait basé sur l'enseignement de ce document, malgré un certain nombre d'avantages techniques évidents, notamment un bon autoguidage de l'outil lorsqu'il est inséré dans l'empreinte de la vis ainsi qu'une aptitude de l'outil à coopérer avec des vis de dimensions différentes du fait de la conicité de sa partie de transmission. On peut noter que l'effet "stick fit" obtenu avec un tel outil serait probablement peu convaincant.

Encore plus récemment, la société (du même nom) qui exploite les inventions du célèbre M. Phillips a déposé une demande de brevet, publiée sous le numéro US 2011/0217143 A1, qui décrit un outil de vissage agencé pour présenter un effet de "stick fit" réellement efficace. Ainsi, cette demande enseigne qu'un tel effet peut être obtenu en partant d'empreintes connues, simplement en ménageant des plans inclinés, avec un angle compris entre 1 et 3 degrés par rapport à l'axe longitudinal dans des régions périphériques n'entrant pas en jeu dans la transmission du couple, sur l'outil et sur la vis associée.

Toutefois, si ce document présente un grand nombre de variantes de réalisation, celles-ci mettent toutes en oeuvre des empreintes dont les flancs sont droits (c'est-à-dire dont les génératrices sont parallèles à la direction longitudinale). Aussi, ce type de document (émanant de l'un des plus gros acteurs du marché de la visserie) illustre le fait que, même après 80 ans, les géométries coniques n'ont toujours pas su convaincre, probablement parce que toutes les solutions présentées jusqu'ici n'offraient pas un confort d'utilisation suffisant.

### Divulgation de l'invention

Un but principal de la présente invention est de proposer un outil de vissage, et une vis associée, répondant à l'ensemble des problèmes qui viennent d'être exposés, c'est-à-dire qui offre un grand confort d'utilisation, y compris pour la transmission de couples élevés, une polyvalence de l'outil en relation avec différentes dimensions de vis et, en outre, qui présente un effet de "stick fit" efficace.

A cet effet, la présente invention concerne plus particulièrement un outil de vissage conique du type mentionné plus haut, dans lequel les régions de jonction présentent, suivant la direction longitudinale, un angle de cône plus faible que l'angle de cône des portions tangentielles, sensiblement inférieur à 5 degrés, préférablement inférieur à 3 degrés.

Grâce à ces caractéristiques, l'outil de vissage combine l'ensemble des avantages souhaités tout en les optimisant. En effet, aussi bien les portions tangentielles distales que les régions de jonction constituent des surfaces qui ne contribuent pas à la transmission des couples entre l'outil de vissage et la vis. Or, le fait de prévoir la réalisation de surfaces donnant lieu à des frottements au niveau des régions de jonction permet de préserver un angle de cône plus important au niveau des portions tangentielles distales, d'ouverture angulaire plus importante que les régions de jonction, ce qui permet d'améliorer le guidage de l'outil lorsqu'il est inséré dans une tête de vis.

Le Demandeur a dû faire preuve d'une grande audace pour parvenir à une telle solution, non seulement parce que les solutions qui dominent le marché actuellement sont de type à flancs droits, comme relevé précédemment, mais également par le fait d'avoir osé augmenter la complexité de la géométrie de l'outil, de même que celui de la vis, par la mise en oeuvre de deux angles de conicité différents pour obtenir l'effet de "stick fit", en plus de l'autoguidage, alors que la réalisation de surfaces planes est généralement préférée.

De manière avantageuse, on peut prévoir que l'angle de cône des régions de jonction est sensiblement compris entre 0,5 et 2,5 degrés, préférablement entre 1 et 2 degrés.

De manière générale, on peut prévoir que l'angle situé entre les parties principales des deux portions de liaison d'un même lobe de transmission est égal ou supérieur à l'angle situé entre les parties principales de deux portions de liaison adjacentes appartenant à des lobes de transmission adjacents.

Grâce à ces caractéristiques, l'outil présente une robustesse suffisante pour permettre la transmission de couples élevés.

Dans ce cas, on peut avantageusement prévoir que l'angle situé entre les parties principales des deux portions de liaison d'un même lobe de transmission est sensiblement compris entre 75 et 85 degrés.

Par ailleurs, selon une première variante de réalisation préférée, on peut prévoir que chacune des régions de jonction présente sensiblement la forme d'un arc de cercle.

En alternative, selon une autre variante de réalisation, on peut prévoir que chacune des régions de jonction présente deux concavités séparées par une portion centrale légèrement convexe.

De manière générale, il est avantageux de prévoir que l'enveloppe périphérique soit exempte d'arête vive.

Grâce à cette caractéristique, l'outil risque moins d'être endommagé, notamment lorsque les vis présentent des variations dimensionnelles importantes, par exemple comme résultat de tolérances de fabrication trop larges.

Par ailleurs, on peut avantageusement prévoir que le rapport entre le rayon mesuré au milieu de l'une des régions de jonction et le rayon mesuré au milieu de l'une des portions tangentielles est sensiblement compris entre 0,3 et 0,7. On obtient ainsi un bon compromis entre le confort d'utilisation, notamment la facilité à insérer l'outil dans une empreinte de vis, et la résistance de l'outil lors de la transmission de couples élevés.

Selon un mode de réalisation préféré, on peut prévoir que l'enveloppe périphérique est tronquée à son extrémité libre de manière à définir une surface plane sensiblement perpendiculaire à la direction longitudinale à l'extrémité de la deuxième partie.

La présente invention concerne également une vis selon la revendication 10 destinée à coopérer avec un outil de vissage selon la revendication 1, comportant une portion portant un pas de vis et une tête comprenant une empreinte destinée à recevoir au moins partiellement la deuxième partie de l'outil de vissage.

### Brève description des dessins

D'autres caractéristiques et avantages de la présente invention apparaîtront plus clairement à la lecture de la description détaillée de deux modes de réalisation préférés qui suit, faite en référence aux dessins annexés donnés à titre d'exemples non limitatifs et dans lesquels:
- la figure 1 représente une vue en perspective simplifiée d'un exemple d'outil et d'une vis correspondante selon un premier mode de réalisation préféré de la présente invention;
- la figure 2a représente une vue de face simplifiée de l'outil de la figure 1, sur la gauche, et un agrandissement de la partie centrale, sur la droite;
- la figure 2b représente une vue en coupe longitudinale simplifiée de l'outil de la figure 1, suivant le plan de coupe A-A de la figure 2a;
- la figure 3a représente une vue de face simplifiée de la vis de la figure 1;
- la figure 3b représente une vue en coupe longitudinale simplifiée de la vis de la figure 1, suivant le plan de coupe B-B de la figure 3a;
- la figure 4 représente une vue en perspective simplifiée d'un exemple d'outil selon un deuxième mode de réalisation préféré de la présente invention, lorsqu'il est engagé dans l'empreinte d'une vis correspondante, et
- la figure 5 représente des vues en coupe transversale et longitudinale simplifiées de l'outil et de la vis de la figure 4.

### Mode(s) de réalisation de l'invention

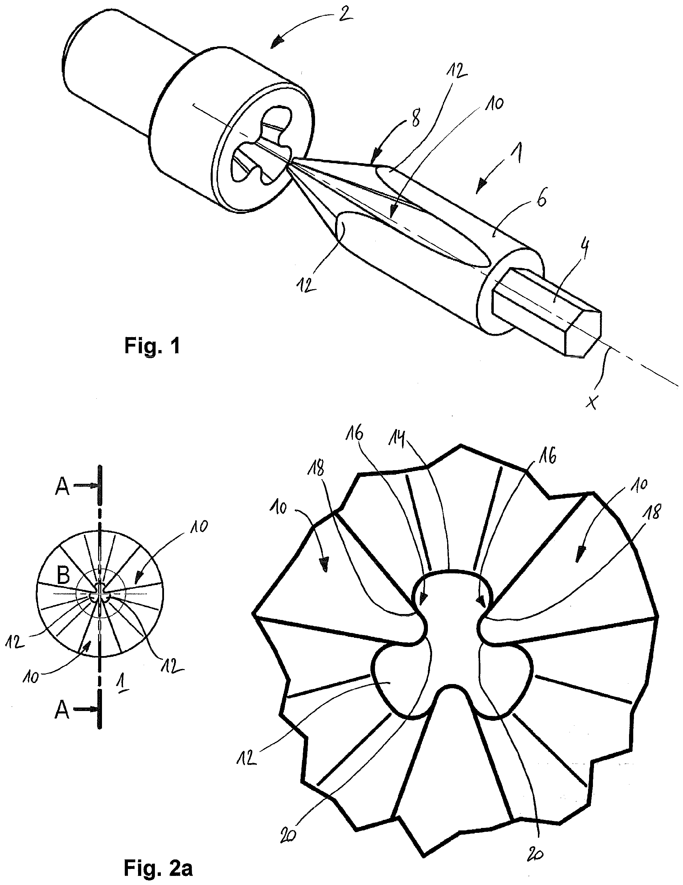

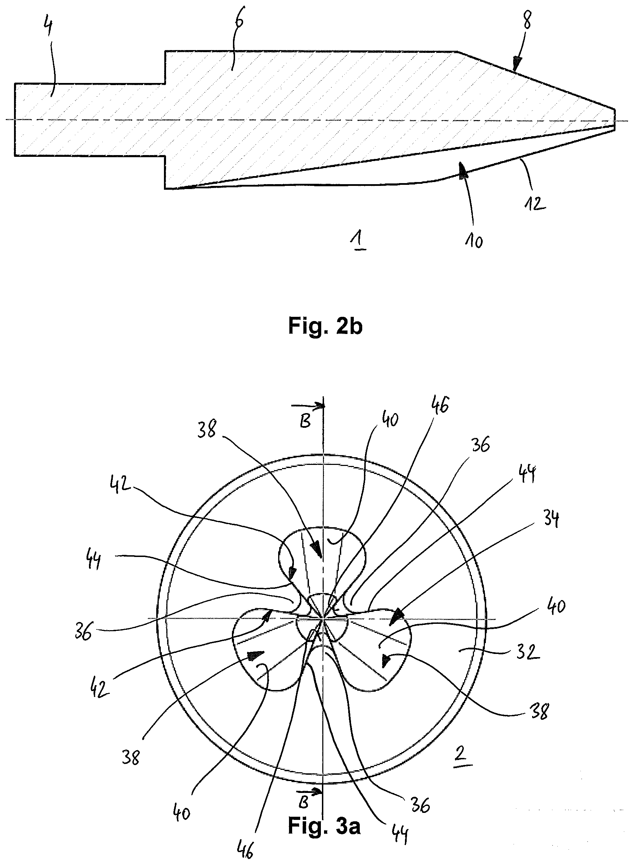

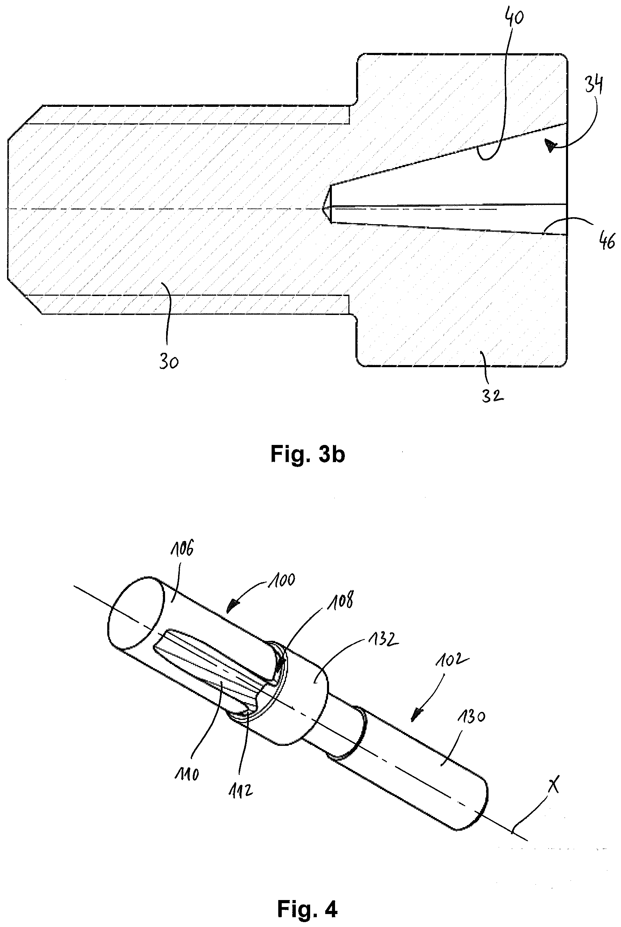

La figure 1 représente une vue en perspective générale simplifiée d'un exemple d'outil de vissage 1 et d'une vis 2 correspondante selon un premier mode de réalisation préféré de la présente invention. L'outil 1 est présenté plus en détail en vue de face (figure 2a avec, sur la droite, un agrandissement de la partie centrale repérée par B sur la vue de gauche) et en coupe longitudinale (figure 2b), de même que la vis 2 (respectivement sur les figures 3a et 3b).

L'outil de vissage 1 présente un axe longitudinal X et comporte une première partie 4, d'entraînement, destinée à recevoir un couple appliqué par un utilisateur ou par un porte-outil. Ici, la première partie 4 est illustrée avec une section transversale en hexagone, à titre illustratif non limitatif, pour pouvoir être couplée soit à un manche de tournevis comportant une prise femelle à six pans, soit à un porte-outil adapté.

En suivant sa direction longitudinale, l'outil 1 comporte ensuite une partie centrale intermédiaire 6, solidaire de la première partie 4 et assurant la liaison entre la première partie 4 et une deuxième partie 8, de transmission, solidaire en rotation de la partie centrale 6 et destinée à coopérer avec la vis 2 pour lui retransmettre le couple reçu.

D'autres réalisations de la structure générale de l'outil 1 sont envisageables sans sortir du cadre de la présente invention, comme par exemple l'interposition d'une liaison par cardan entre les première et deuxième parties.

La deuxième partie 8 présente une enveloppe périphérique de forme générale conique, dont la base est située du côté de la première partie 4, dans laquelle trois concavités 10 longitudinales à génératrices coniques sont ménagées en étant régulièrement réparties, de manière à définir trois lobes 12 de transmission radiaux identiques.

On notera que les concavités 10 s'étendent ici dans la partie centrale intermédiaire 6 sans impact direct sur la mise en oeuvre de l'invention, mais plutôt pour une question de simplification de la fabrication de l'outil de vissage 1.

Comme cela ressort plus particulièrement de la figure 2a, chacun des lobes 12 de transmission présente, dans une coupe perpendiculaire à la direction longitudinale, une portion tangentielle distale 14 s'étendant sensiblement suivant un arc de cercle et prolongée, de part et d'autre, par deux portions de liaison 16, dont chacune est définie par une courbe comprenant une partie principale 18 sensiblement radiale et présentant un point d'inflexion, avant de rejoindre une région de jonction proximale 20 assurant la jonction avec une portion de liaison 16 voisine.

Chacune des régions de jonction 20 présente ici sensiblement la forme d'un arc de cercle, de manière préférée non limitative.

De manière avantageuse, l'angle situé entre les parties principales 18 des deux portions de liaison 16 d'un même lobe 12 de transmission est égal ou supérieur à l'angle situé entre les parties principales 18 de deux portions de liaison 16 adjacentes appartenant à des lobes 12 de transmission adjacents. Cet angle pourra préférablement être compris entre 75 et 85 degrés. En particulier, l'outil de vissage 1 illustré sur la figure 2a présente un tel angle de 80 degrés, à titre illustratif non limitatif.

La valeur de cet angle impacte directement la robustesse de l'outil de vissage 1 et donc son aptitude à transmettre des couples plus ou moins élevés. L'homme du métier pourra bien entendu choisir un angle plus faible pour réaliser un outil destiné à transmettre des couples de valeurs limitées sans sortir du cadre de la présente invention.

Par ailleurs, on peut avantageusement prévoir que le rapport entre le rayon mesuré au milieu de l'une des régions de jonction 20 et le rayon mesuré au milieu de l'une des portions tangentielles 14 est sensiblement compris entre 0,3 et 0,7, afin de garantir un bon compromis entre le confort d'utilisation, lors de l'insertion de l'outil dans la vis, et la robustesse de l'outil.

La figure 2b représente une vue en coupe longitudinale schématique de l'outil de vissage 1, réalisée suivant le plan repéré par A-A sur la vue de gauche de la figure 2a.

On a illustré ici un angle de l'ordre de 20 degrés pour l'enveloppe conique de la deuxième partie 8. Les génératrices coniques des concavités 10 présentent quant à elles un angle de cône (c'est-à-dire l'angle entre une génératrice et la direction longitudinale) réduit par rapport à l'angle de l'enveloppe conique, en tout cas égal ou inférieur à 5 degrés, préférablement à 3 degrés, plus préférablement compris entre 0,5 et 2,5 degrés, encore plus préférablement entre 1 et 2 degrés. L'angle de cône réduit des concavités 10 a été exagéré sur la figure 2b, pour plus de clarté.

Un tel angle permet d'assurer l'obtention de l'effet "stick fit" souhaité, celui-ci étant basé sur le principe général connu sous le nom de "cône morse".

Comme cela apparaît sur les figures 3a et 3b, la vis 2 présente une géométrie complémentaire à celle de l'outil de vissage 1.

Plus précisément, la vis 2 comporte une portion fonctionnelle 30 portant un pas de vis et une tête 32 comprenant une empreinte 34 destinée à recevoir au moins partiellement la deuxième partie 8 de l'outil de vissage 1, l'empreinte 34 ayant une enveloppe périphérique de forme générale conique, dont la base est située du côté de son ouverture, et présentant trois surépaisseurs 36 longitudinales à génératrices coniques, régulièrement réparties, définissant trois logements 38 de transmission radiaux identiques.

Chacun des logements 38 présente, dans une coupe perpendiculaire à la direction longitudinale de la vis, une portion tangentielle 40 distale s'étendant sensiblement suivant un arc de cercle et prolongée, de part et d'autre, par deux portions de liaison 42 dont chacune est définie par une courbe comprenant une partie principale 44 sensiblement radiale et présentant un point d'inflexion avant de rejoindre une région de jonction 46 proximale située sur l'une des surépaisseurs 36 et assurant la jonction avec une portion de liaison 42 voisine.

En outre, les régions de jonction 46 présentent, suivant la direction longitudinale, un angle de cône plus faible que l'angle de cône des portions tangentielles 40, sensiblement inférieur à 5 degrés, préférablement inférieur à 3 degrés.

L'angle de cône des régions de jonction 46 est plus préférablement compris entre 0,5 et 2,5 degrés, encore plus préférablement entre 1 et 2 degrés. De plus, il est préférable que cet angle soit légèrement supérieur à celui de l'outil de vissage 1 pour assurer que ce dernier puisse bien être inséré jusqu'au fond de l'empreinte 34.

De même que pour l'outil 1, l'angle situé entre les parties principales 44 des deux portions de liaison 42 d'un même logement 38 de transmission est égal ou supérieur à l'angle situé entre les parties principales 44 de deux portions de liaison 42 adjacentes appartenant à des logements 38 de transmission adjacents.

De manière avantageuse, on peut également prévoir que le rapport entre le rayon mesuré au milieu de l'une des régions de jonction 46 et le rayon mesuré au milieu de l'une desdites portions tangentielles 40 est sensiblement compris entre 0,3 et 0,7.

Grâce aux caractéristiques qui viennent d'être exposées, on obtient un outil de vissage 1 et la vis 2 correspondante qui présentent un grand confort d'utilisation, du fait de la grande ouverture conique de l'empreinte de la vis qui facilite l'insertion de l'outil et assure un autoguidage de ce dernier. L'empreinte conique permet également d'utiliser un même outil avec plusieurs dimensions de vis, comme déjà exposé. L'orientation radiale des portions de liaison assure une transmission optimale des couples de l'outil à la vis, tandis que les dimensions relatives des lobes de transmissions, respectivement des logements de transmission, assurent que des couples élevés peuvent être transmis sans risque d'endommager ni l'outil ni la vis. Enfin, le choix particulier de l'angle de cône des régions de jonction permet d'obtenir un effet de "stick fit" très pratique lors de l'utilisation de l'outil de vissage. Les régions de jonction n'interviennent quasiment pas dans la transmission des couples, aussi le fait de prévoir un angle de cône différent n'influe pas sur la qualité de la transmission des couples. Si la réalisation de surfaces coniques est plus complexe que la réalisation de surfaces planes, elle permet toutefois d'augmenter sensiblement les superficies en contact (à angle identique entre deux parties de liaison situées en regard l'une de l'autre) et donc d'améliorer la qualité de l'effet de "stick fit" ainsi obtenu. En outre, comme souligné plus haut, la mise en oeuvre des ces surfaces donnant lieu à l'effet de "stick fit" au niveau des régions de jonction est avantageuse du fait que ces dernières présentent une ouverture angulaire réduite (en coupe transversale). En effet, une telle mesure permet de maintenir un angle de cône plus important au niveau des portions tangentielles, qui présentent une grande ouverture angulaire, ce qui est plus favorable du point de vue du confort d'utilisation lors de l'insertion de l'outil dans la vis.

On obtient ainsi une géométrie qui constitue un excellent compromis pour répondre simultanément et de manière satisfaisante à l'ensemble des critères auxquels doit répondre un ensemble outil de vissage - vis.

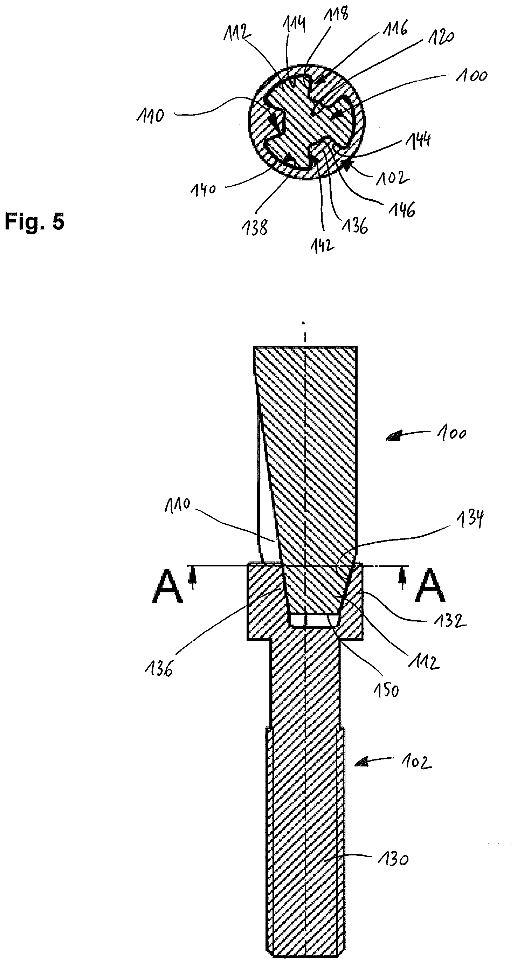

Les figures 4 et 5 illustrent un outil de vissage 100 et la vis correspondante 102 selon un deuxième mode de réalisation préféré de la présente invention.

L'outil 100 est présenté sur les figures 4 et 5 alors qu'il est inséré dans la vis 102.

L'outil de vissage 100 présente un axe longitudinal X et comporte une première partie (non illustrée), d'entraînement, destinée à recevoir un couple appliqué par un utilisateur ou par un porte-outil.

En suivant sa direction longitudinale, l'outil 100 comporte ensuite une partie centrale intermédiaire 106, solidaire de la première partie et assurant la liaison entre la première partie et une deuxième partie 108, de transmission, solidaire en rotation de la partie centrale 106 et destinée à coopérer avec la vis 102 pour lui retransmettre le couple reçu.

La deuxième partie 108 présente une enveloppe périphérique de forme générale conique, dont la base est située du côté de la première partie, dans laquelle trois concavités 110 longitudinales à génératrices coniques sont ménagées en étant régulièrement réparties, de manière à définir trois lobes 112 de transmission radiaux identiques.

On notera que les concavités 110 s'étendent dans la partie centrale intermédiaire 106 sans impact direct sur la mise en oeuvre de l'invention, mais plutôt pour une question de simplification de la fabrication de l'outil de vissage 100.

Comme cela ressort plus particulièrement de la vue située en haut sur la figure 5, chacun des lobes 112 de transmission présente, dans une coupe perpendiculaire à la direction longitudinale, une portion tangentielle distale 114 s'étendant sensiblement suivant un arc de cercle et prolongée, de part et d'autre, par deux portions de liaison 116, dont chacune est définie par une courbe comprenant une partie principale 118 sensiblement radiale et présentant un point d'inflexion, avant de rejoindre une région de jonction proximale 120 assurant la jonction avec une portion de liaison 116 voisine.

Chacune des régions de jonction 120 présente ici sensiblement la forme d'un arc de cercle d'orientation inverse par rapport au premier mode de réalisation, c'est-à-dire qu'elle est légèrement convexe. Chaque région de jonction peut être vue comme présentant deux portions latérales concaves séparées l'une de l'autre par une portion centrale convexe.

De manière avantageuse, l'angle situé entre les parties principales 118 des deux portions de liaison 116 d'un même lobe 112 de transmission est égal ou supérieur à l'angle situé entre les parties principales 118 de deux portions de liaison 116 adjacentes appartenant à des lobes 112 de transmission adjacents. Cet angle pourra préférablement être compris entre 75 et 85 degrés.

Par ailleurs, on peut avantageusement prévoir que le rapport entre le rayon mesuré au milieu de l'une des régions de jonction 120 et le rayon mesuré au milieu de l'une des portions tangentielles 114 est sensiblement compris entre 0,3 et 0,7, afin de garantir un bon compromis entre le confort d'utilisation, lors de l'insertion de l'outil dans la vis, et la robustesse de l'outil.

La figure 5 représente une vue en coupe longitudinale schématique de l'outil de vissage 100.

Les génératrices coniques des concavités 110 présentent un angle réduit en référence à l'angle de l'enveloppe conique, en tout cas égal ou inférieur à 5 degrés, préférablement à 3 degrés, plus préférablement compris entre 0,5 et 2,5 degrés, encore plus préférablement entre 1 et 2 degrés. L'angle de cône réduit des concavités 110 a été exagéré sur la figure 5, pour plus de clarté.

Comme cela apparaît sur la figure 5, la vis 102 présente une géométrie complémentaire à celle de l'outil de vissage 100.

Plus précisément, la vis 102 comporte une portion fonctionnelle 130 portant un pas de vis et une tête 132 comprenant une empreinte 134 destinée à recevoir au moins partiellement la deuxième partie 108 de l'outil de vissage 100, l'empreinte 134 ayant une enveloppe périphérique de forme générale conique, dont la base est située du côté de son ouverture, et présentant trois surépaisseurs 136 longitudinales à génératrices coniques, régulièrement réparties, définissant trois logements 138 de transmission radiaux identiques.

Chacun des logements 138 présente, dans une coupe perpendiculaire à la direction longitudinale de la vis, une portion tangentielle 140 distale s'étendant sensiblement suivant un arc de cercle et prolongée, de part et d'autre, par deux portions de liaison 142 dont chacune est définie par une courbe comprenant une partie principale 144 sensiblement radiale et présentant un point d'inflexion avant de rejoindre une région de jonction 146 proximale située sur l'une des surépaisseurs et assurant la jonction avec une portion de liaison 142 voisine.

En outre, les régions de jonction 146 présentent, suivant la direction longitudinale, un angle de cône plus faible que l'angle de cône des portions tangentielles 140, sensiblement inférieur à 5 degrés, préférablement inférieur à 3 degrés.

L'angle de cône des régions de jonction 146 est plus préférablement compris entre 0,5 et 2,5 degrés, encore plus préférablement entre 1 et 2 degrés. De plus, il est préférable que cet angle soit légèrement supérieur à celui de l'outil de vissage 100 pour assurer que ce dernier puisse bien être inséré jusqu'au fond de l'empreinte 134.

De même que pour l'outil 100, l'angle situé entre les parties principales 144 des deux portions de liaison 142 d'un même logement 138 de transmission est égal ou supérieur à l'angle situé entre les parties principales 144 de deux portions de liaison 142 adjacentes appartenant à des logements 138 de transmission adjacents.

De manière avantageuse, on peut également prévoir que le rapport entre le rayon mesuré au milieu de l'une des régions de jonction 146 et le rayon mesuré au milieu de l'une desdites portions tangentielles 140 est sensiblement compris entre 0,3 et 0,7.

Ainsi, par la mise en oeuvre de ce deuxième mode de réalisation, on obtient les mêmes avantages qui ont été exposés plus haut en relation avec le premier mode de réalisation.

On notera que si l'outil 1 du premier mode de réalisation se termine quasiment en pointe, l'outil 100 du deuxième mode de réalisation est légèrement différent étant donné que l'enveloppe périphérique de sa deuxième partie 108 est tronquée à son extrémité libre, de manière à définir une surface plane 150 sensiblement perpendiculaire à la direction longitudinale de l'outil.

On relèvera que dans les deux variantes présentées, les enveloppes périphériques de l'outil ou de l'empreinte de la vis sont exemptes d'arête vive. Ainsi, non seulement l'insertion de l'outil dans la vis est facilitée, mais en outre l'outil et la vis présentent un risque réduit de subir des dommages en cas de transmission de couples élevés, en référence à des outils et vis présentant des arêtes vives.

La description qui précède s'attache à décrire deux modes de réalisation particuliers à titre d'illustration non limitative et, l'invention n'est pas limitée à la mise en oeuvre de certaines caractéristiques particulières qui viennent d'être décrites, en particulier les formes illustrées et décrites pour les parties ne présentant pas de lien direct avec la mise en oeuvre de l'invention, comme par exemple la forme de la tête des vis ou encore les jonctions entre les portions tangentielles et les parties de liaison.

En fonction des matériaux utilisés, non seulement pour l'outil de vissage mais également pour la vis, et en fonction de l'angle de cône de leurs régions de jonction respectives (jusqu'à 5 degrés), un degré prédéfini de la force de l'effet stick fit peut être ajusté. Ainsi, il est possible de prévoir une gamme d'outils de vissage (et/ou de vis) répartis suivant une échelle de force de l'effet stick fit correspondant (par exemple légère, moyenne, forte). En effet, il peut être souhaitable de recourir à des forces de l'effet stick fit différentes selon les applications concernées.

L'homme du métier ne rencontrera pas de difficulté particulière pour adapter le contenu de la présente divulgation à ses propres besoins et mettre en oeuvre un outil de vissage et la vis correspondante selon l'invention sans nécessairement mettre en oeuvre toutes les caractéristiques du mode de réalisation qui vient d'être décrit.

## Revendications

1. Outil de vissage (1, 100) d'axe longitudinal X comportant, suivant sa direction longitudinale, une première partie (4), d'entraînement, destinée à recevoir un couple appliqué par un utilisateur ou par un porte-outil, et une deuxième partie (8, 108), de transmission, solidaire en rotation de ladite première partie et destinée à coopérer avec une vis (2, 102) pour lui retransmettre le couple reçu, ladite deuxième partie ayant une enveloppe périphérique de forme générale conique, dont la base est située du côté de ladite première partie, et présentant trois concavités (10, 110) longitudinales à génératrices coniques, régulièrement réparties, définissant trois lobes (12, 112) de transmission radiaux identiques, dont chacun présente, dans une coupe perpendiculaire à ladite direction longitudinale, une portion tangentielle distale (14, 114) s'étendant sensiblement suivant un arc de cercle et prolongée, de part et d'autre, par deux portions de liaison (16, 116) dont chacune est définie par une courbe comprenant une partie principale (18, 118) sensiblement radiale et présentant un point d'inflexion avant de rejoindre une région de jonction (20, 120) proximale assurant la jonction avec une portion de liaison (16, 116) voisine,
**caractérisé en ce que** lesdites régions de jonction (20, 120) présentent, suivant ladite direction longitudinale, un angle de cône plus faible que l'angle de cône des portions tangentielles, sensiblement inférieur à 5 degrés, préférablement inférieur à 3 degrés.

2. Outil de vissage selon la revendication 1, **caractérisé en ce que** ledit angle de cône desdites régions de jonction (20, 120) est sensiblement compris entre 0,5 et 2,5 degrés, préférablement entre 1 et 2 degrés.

3. Outil de vissage selon la revendication 1 ou 2, **caractérisé en ce que** l'angle situé entre les parties principales (18, 118) des deux portions de liaison d'un même lobe (12, 112) de transmission est égal ou supérieur à l'angle situé entre les parties principales de deux portions de liaison (16, 116) adjacentes appartenant à des lobes de transmission adjacents.

4. Outil de vissage selon la revendication 3, **caractérisé en ce que** l'angle situé entre les parties principales (18, 118) des deux portions de liaison (16, 116) d'un même lobe de transmission est sensiblement compris entre 75 et 85 degrés.

5. Outil de vissage selon l'une des revendications précédentes, **caractérisé en ce que** chacune desdites régions de jonction (20, 120) présente sensiblement la forme d'un arc de cercle.

6. Outil de vissage selon l'une des revendications 1 à 4, **caractérisé en ce que** chacune desdites régions de jonction (20, 120) présente deux concavités séparées par une portion centrale légèrement convexe.

7. Outil de vissage selon l'une des revendications précédentes, **caractérisé en ce que** ladite enveloppe périphérique est exempte d'arête vive.

8. Outil de vissage selon l'une des revendications précédentes, **caractérisé en ce que** ladite enveloppe périphérique est tronquée à son extrémité libre de manière à définir une surface plane sensiblement perpendiculaire audit axe X à l'extrémité de ladite deuxième partie (8, 108).

9. Outil de vissage selon l'une des revendications précédentes, **caractérisé en ce que** le rapport entre le rayon mesuré au milieu de l'une desdites régions de jonction (20, 120) et le rayon mesuré au milieu de l'une desdites portions tangentielles est sensiblement compris entre 0,3 et 0,7.

10. Vis (2, 102) destinée à coopérer avec un outil de vissage (1, 100) selon l'une des revendications précédentes, comportant une portion (30, 130) portant un pas de vis et une tête (32, 132) comprenant une empreinte (34, 134) destinée à recevoir au moins partiellement la deuxième partie de l'outil de vissage, ladite empreinte ayant une enveloppe périphérique de forme générale conique, dont la base est située du côté de son ouverture, et présentant trois surépaisseurs (36, 136) longitudinales à génératrices coniques, régulièrement réparties, définissant trois logements (38, 138) de transmission radiaux identiques, dont chacun présente, dans une coupe perpendiculaire à ladite direction longitudinale, une portion tangentielle (40, 140) distale s'étendant sensiblement suivant un arc de cercle et prolongée, de part et d'autre, par deux portions de liaison (42, 142) dont chacune est définie par une courbe comprenant une partie principale (44, 144) sensiblement radiale et présentant un point d'inflexion avant de rejoindre une région de jonction (46, 146) proximale située sur l'une desdites surépaisseurs et assurant la jonction avec une portion de liaison (42, 142) voisine,
**caractérisée en ce que** lesdites régions de jonction (46, 146) présentent, suivant ladite direction longitudinale, un angle de cône plus faible que l'angle de cône des portions tangentielles (40, 140), sensiblement inférieur à 5 degrés, préférablement inférieur à 3 degrés.

11. Vis selon la revendication 10, **caractérisée en ce que** ledit angle de cône desdites régions de jonction (46, 146) est sensiblement compris entre 0,5 et 2,5 degrés, préférablement entre 1 et 2 degrés.

12. Vis selon la revendication 10 ou 11, **caractérisée en ce que** l'angle situé entre les parties principales (44, 144) des deux portions de liaison (42, 142) d'un même logement de transmission est égal ou supérieur à l'angle situé entre les parties principales de deux portions de liaison (42, 142) adjacentes appartenant à des logements (38, 138) de transmission adjacents.

13. Vis selon la revendication 12, **caractérisée en ce que** l'angle situé entre les parties principales (44, 144) des deux portions de liaison d'un même logement (38, 138) de transmission est sensiblement compris entre 75 et 85 degrés.

14. Vis selon l'une des revendications 10 à 13, **caractérisée en ce que** ladite enveloppe périphérique est exempte d'arête vive.

15. Vis selon l'une des revendications 10 à 14, **caractérisée en ce que** le rapport entre le rayon mesuré au milieu de l'une desdites régions de jonction (46, 146) et le rayon mesuré au milieu de l'une desdites portions tangentielles (40, 140) est sensiblement compris entre 0,3 et 0,7.

## Patentansprüche

1. Schraubwerkzeug (1,100) um eine Längsachse X, bestehend, in Längsrichtung, aus einem ersten Antriebsteil (4), das ein von einem Anwender oder einem Werkzeughalter ausgeübtes Drehmoment aufnimmt, und einem zweiten Übertragungsteil (8,108), das bei dessen Drehung kraftschlüssig mit dem gesagten ersten Teil verbunden ist und dazu bestimmt ist, mit einer Schraube (2,102) zusammenzuwirken, auf die es das erhaltene Drehmoment überträgt, wobei das gesagte zweite Teil eine Umfangshülle in allgemein konischer Form aufweist, deren Basis sich an der Seite des gesagten ersten Teils befindet, und drei längliche Vertiefungen (10,110) mit regelmäßig verteilten, konischen Erzeugenden besitzt, die drei identische radiale Übertragungskegel (12,112) bilden, von denen jeder, in einem Querschnitt senkrecht zur Längsrichtung, einen distalen tangentialen Abschnitt (14,114) aufweist, der sich im Wesentlichen entlang einem Kreisbogen erstreckt und auf beiden Seiten durch zwei Verbindungsbereiche (16,116) verlängert wird, die beide jeweils von einer Kurve gebildet werden, die einen im Wesentlichen radialen Hauptteil (18,118) aufweist und einen Wendepunkt umfasst, bevor ein proximaler Übergangsbereich (20,120) erreicht wird, der die Verbindung zu einem benachbarten Verbindungsbereich (16,116) gewährleistet,
**dadurch gekennzeichnet, dass** die gesagten Übergangsbereiche (20,120), in Längsrichtung, einen Kegelwinkel aufweisen, der kleiner als der Kegelwinkel der tangentialen Abschnitte ist und im Wesentlichen weniger als 5 Grad, vorzugsweise weniger als 3 Grad, beträgt.

2. Schraubwerkzeug nach Anspruch 1, **dadurch gekennzeichnet, dass** der gesagte Kegelwinkel der gesagten Übergangsbereiche (20,120) im Wesentlichen zwischen 0,5 und 2,5 Grad und vorzugsweise zwischen 1 und 2 Grad liegt.

3. Schraubwerkzeug nach Anspruch 1 oder 2, **dadurch gekennzeichnet, dass** der Winkel zwischen den Hauptteilen (18,118) der beiden Verbindungsbereiche desselben Übertragungskegels (12,112) größer oder gleich dem Winkel zwischen den Hauptteilen von zwei angrenzenden Verbindungsbereichen (16,116) von angrenzenden Übertragungskegeln ist.

4. Schraubwerkzeug nach Anspruch 3, **dadurch gekennzeichnet, dass** der Winkel zwischen den Hauptteilen (18,118) der beiden Verbindungsbereiche (16,116) desselben Übertragungskegels im Wesentlichen zwischen 75 und 85 Grad liegt.

5. Schraubwerkzeug nach einem der vorstehenden Ansprüche, **dadurch gekennzeichnet, dass** jeder der gesagten Übertragungsbereiche (20,120) im Wesentlichen die Form eines Kreisbogens aufweist.

6. Schraubwerkzeug nach einem der Ansprüche 1 bis 4, **dadurch gekennzeichnet, dass** jeder der gesagten Übertragungsbereiche (20,120) zwei Vertiefungen aufweist, die durch einen leicht konvexen Mittelabschnitt voneinander getrennt sind.

7. Schraubwerkzeug nach einem der vorstehenden Ansprüche, **dadurch gekennzeichnet, dass** die gesagte Umfangshülle keine scharfen Kanten besitzt.

8. Schraubwerkzeug nach einem der vorstehenden Ansprüche, **dadurch gekennzeichnet, dass** die gesagte Umfangshülle an ihrem freien Ende abgestumpft ist, so dass eine ebene Fläche erzeugt wird, die im Wesentlichen senkrecht zur Achse X am Ende des gesagten zweiten Teils (8,108) verläuft.

9. Schraubwerkzeug nach einem der vorstehenden Ansprüche, **dadurch gekennzeichnet, dass** das Verhältnis zwischen dem gemessenen Radius in der Mitte eines der gesagten Übertragungsbereiche (20,120) und dem gemessenen Radius in der Mitte eines der gesagten tangentialen Abschnitte im Wesentlichen zwischen 0,3 und 0,7 liegt.

10. Schraube (2,102), die dazu bestimmt ist, mit einem Schraubwerkzeug (1,100) nach einem der vorstehenden Ansprüche zusammenzuwirken, bestehend aus einem Abschnitt (30,130) mit einem Schraubgewinde und einem Kopf (32,132) mit einem Schlitz (34,134) zur zumindest teilweisen Aufnahme des zweiten Teils des Schraubwerkzeugs, wobei der gesagte Schlitz eine Umfangshülle in allgemein konischer Form aufweist, deren Basis sich an der Seite ihrer Öffnung befindet, und drei längliche Verdickungen (36,136) mit regelmäßig verteilten, konischen Erzeugenden besitzt, die drei identische radiale Übertragungsgehäuse (38,138) bilden, von denen jedes, in einem Querschnitt senkrecht zur Längsrichtung, einen distalen tangentialen Abschnitt (40,140) aufweist, der sich im Wesentlichen entlang einem Kreisbogen erstreckt und auf beiden Seiten durch zwei Verbindungsbereiche (42,142) verlängert wird, die beide jeweils von einer Kurve gebildet werden, die einen im Wesentlichen radialen Hauptteil (44,144) aufweist und einen Wendepunkt umfasst, bevor ein proximaler Übergangsbereich (46,146) auf einer der gesagten Verdickungen erreicht wird, der die Verbindung zu einem benachbarten Verbindungsbereich (42,142) gewährleistet, **dadurch gekennzeichnet, dass** die gesagten Übergangsbereiche (46,146), in Längsrichtung, einen Kegelwinkel aufweisen, der kleiner als der Kegelwinkel der tangentialen Abschnitte (40,140) ist und im Wesentlichen weniger als 5 Grad, vorzugsweise weniger als 3 Grad, beträgt.

11. Schraube nach Anspruch 10, **dadurch gekennzeichnet, dass** der gesagte Kegelwinkel der gesagten Übergangsbereiche (46,146) im Wesentlichen zwischen 0,5 und 2,5 Grad und vorzugsweise zwischen 1 und 2 Grad liegt.

12. Schraube nach Anspruch 10 oder 11, **dadurch gekennzeichnet, dass** der Winkel zwischen den Hauptteilen (44,144) der beiden Verbindungsbereiche (42,142) desselben Übertragungsgehäuses größer oder gleich dem Winkel zwischen den Hauptteilen von zwei angrenzenden Verbindungsbereichen (42,142) von angrenzenden Übertragungsgehäusen (38,138) ist.

13. Schraube nach Anspruch 12, **dadurch gekennzeichnet, dass** der Winkel zwischen den Hauptteilen (44,144) der beiden Verbindungsbereiche desselben Übertragungsgehäuses (38,138) im Wesentlichen zwischen 75 und 85 Grad liegt.

14. Schraube nach einem der Ansprüche 10 bis 13, **dadurch gekennzeichnet, dass** die gesagte Umfangshülle keine scharfen Kanten besitzt.

15. Schraube nach einem der Ansprüche 10 bis 14, **dadurch gekennzeichnet, dass** das Verhältnis zwischen dem gemessenen Radius in der Mitte eines der gesagten Übertragungsbereiche (46,146) und dem gemessenen Radius in der Mitte eines der gesagten tangentialen Abschnitte (40,140) im Wesentlichen zwischen 0,3 und 0,7 liegt.

## Claims

1. A screwing tool (1, 100) with a longitudinal axis X comprising, according to its longitudinal direction, a first, drive part (4), which is designed to receive torque applied by a user or by a tool-holder, and a second, transmission part (8, 108), which is secured in rotation to said first part, and is designed to cooperate with a screw (2, 102), in order to re-transmit to it the torque received, said second part having a peripheral envelope with a generally conical form, the base of which is situated on said first part side, and having three longitudinal concavities (10, 110) with conical generatrices, regularly distributed, defining three identical radial transmission lobes (12, 112), each of which has, in a cross-section perpendicular to said longitudinal direction, a distal tangential portion (14, 114) which extends sensibly according to an arc of a circle and which is extended on both sides by two connection portions (16, 116), each of which is defined by a curve comprising a sensibly radial main part (18, 118) and having a point of inflection before re-joining a proximal joining region (20, 120) which ensures the joining with an adjacent connection portion (16, 116),
**characterized in that**, according to said longitudinal direction, said joining regions (20, 120) have a cone angle which is smaller than the cone angle of the tangential portions, and is sensibly less than 5°, preferably less than 3°.

2. The screwing tool as claimed in claim 1, **characterized in that** said cone angle of said joining regions (20, 120) is sensibly between 0.5 and 2.5°, and preferably between 1 and 2°.

3. The screwing tool as claimed in claim 1 or 2, **characterized in that** the angle which is situated between the main parts (18, 118) of the two connection portions of a given transmission lobe (12, 112) is equal to, or greater than, the angle which is situated between the main parts of two adjacent connection portions (16, 116) belonging to adjacent transmission lobes.

4. The screwing tool as claimed in claim 3, **characterized in that** the angle which is situated between the main parts (18, 118) of the two connection portions (16, 116) of a given transmission lobe is sensibly between 75 and 85°.

5. The screwing tool as claimed in one of the preceding claims, **characterized in that** each of said joining regions (20, 120) has sensibly the form of an arc of a circle.

6. The screwing tool as claimed in one of claims 1 to 4, **characterized in that** each of said joining regions (20, 120) has two concavities separated by a central, slightly convex portion.

7. The screwing tool as claimed in one of the preceding claims, **characterized in that** said peripheral envelope is without a sharp edge.

8. The screwing tool as claimed in one of the preceding claims, **characterized in that** said peripheral envelope is truncated at its free end, such as to define a sensibly flat surface which is perpendicular to said axis X at the end of said second part (8, 108).

9. The screwing tool as claimed in one of the preceding claims, **characterized in that** the ratio between the radius measured at the middle of one of said joining regions (20, 120) and the radius measured at the middle of one of said tangential portions is sensibly between 0.3 and 0.7.

10. A screw (2, 102) which is designed to cooperate with a screwing tool (1, 100) as claimed in one of the preceding claims, comprising a portion (30, 130) containing a screw pitch and a head (32, 132) comprising a recess (34, 134) which is designed to receive at least partially the second part of the screwing tool, said recess having a peripheral envelope with a generally conical form, the base of which is situated on its opening side, and having three longitudinal excess thicknesses (36, 136) with conical generatrices, regularly distributed, defining three identical radial transmission receptacles (38, 138), each of which has, in a cross-section perpendicular to said longitudinal direction, a distal tangential portion (40, 140) which extends sensibly according to an arc of a circle, and is extended on both sides by two connection portions (42, 142), each of which is defined by a curve comprising a sensibly radial main part (44, 144), and having a point of inflection before re-joining a proximal joining region (46, 146) which is situated on one of said excess thicknesses, and ensures the joining with an adjacent connection portion (42, 142),
**characterized in that**, according to said longitudinal direction, said joining regions (46, 146) have a cone angle which is smaller than the cone angle of the tangential portions (40, 140), and is sensibly less than 5°, preferably less than 3°.

11. The screw as claimed in claim 10, **characterized in that** said cone angle of said joining regions (46, 146) is sensibly between 0.5 and 2.5°, and preferably between 1 and 2°.

12. The screw as claimed in claim 10 or 11, **characterized in that** the angle which is situated between the main parts (44, 144) of the two connection portions (42, 142) of a given transmission receptacle is equal to, or greater than, the angle which is situated between the main parts of two adjacent connection portions (42, 142) belonging to adjacent transmission receptacles (38, 138).

13. The screw as claimed in claim 12, **characterized in that** the angle which is situated between the main parts (44, 144) of the two connection portions of a given transmission receptacle (38, 138) is sensibly between 75 and 85°.

14. The screw as claimed in any one of claims 10 to 13, **characterized in that** said peripheral envelope is without a sharp edge.

15. The screw as claimed in any one of claims 10 to 14, **characterized in that** the ratio between the radius measured at the middle of one of said joining regions (46, 146) and the radius measured at the middle of one of said tangential portions (40, 140) is sensibly between 0.3 and 0.7.
